# EUROPÄISCHE PATENTSCHRIFT

(11) **EP 3 788 356 B1**
(45) Veröffentlichungstag und Bekanntmachung des Hinweises auf die Patenterteilung: **22.12.2021**
(21) Anmeldenummer: 19720540.4
(22) Anmeldetag: 26.04.2019
(51) Int. Cl.: G01N 27/417

(54) **VERFAHREN ZUM BETREIBEN EINES SENSORS ZUM NACHWEIS MINDESTENS EINES ANTEILS EINER MESSGASKOMPONENTE MIT GEBUNDENEM SAUERSTOFF IN EINEM MESSGAS**
METHOD FOR OPERATING A SENSOR FOR DETECTING AT LEAST A PORTION OF A MEASUREMENT GAS COMPONENT HAVING BOUND OXYGEN IN A MEASUREMENT GAS
PROCÉDÉ DE FONCTIONNEMENT D'UN CAPTEUR POUR DÉTECTER AU MOINS UNE FRACTION D'UN COMPOSANT GAZEUX MESURÉ, LIÉ À DE L'OXYGÈNE, DANS UN GAZ DE MESURE

(30) Priorität: 02.05.2018 DE 102018206765
(43) Veröffentlichungstag der Anmeldung: 10.03.2021
(73) Patentinhaber: Robert Bosch GmbH, 70442 Stuttgart (DE)
(72) Erfinder: OECHTERING, Peter, 76229 Karlsruhe (DE); HEISE, Michael, 01445 Radebeul (DE); GUEL, Mustafa, 71522 Backnang (DE); FIEDLER, Michael, 71034 Boeblingen (DE); SCHROEDER, Andy, 5405 Daettwil (CH); SINGER, Matthias, 73730 Esslingen (DE); DAECKE, Dirk, 70619 Stuttgart (DE)
(86) Internationale Anmeldenummer: PCT/EP2019/060712
(87) Internationale Veröffentlichungsnummer: WO 2019/211182

(56) Entgegenhaltungen:
- EP-A1- 2 056 100
- DE-A1-102014 224 943
- DE-A1-102015 210 473

## Beschreibung

### Stand der Technik

Aus dem Stand der Technik ist eine Vielzahl von Verfahren und Sensoren zum Nachweis mindestens eines Anteils der Messgaskomponente mit gebundenem Sauerstoff in einem Gasgemisch, insbesondere in einem Abgas einer Verbrennungskraftmaschine, durch Erfassen eines Anteils an Sauerstoff, der durch eine Reduktion der Messgaskomponente mit dem gebundenem Sauerstoff erzeugt wird, bekannt, beispielsweise aus der DE 10 2015 210 473 A1, der DE 10 2014 224 943 A1 und der EP 2 056 100 A1.

Sensoren zum Nachweis mindestens eines Anteils der Messgaskomponente mit gebundenem Sauerstoff in einem Gasgemisch, die auch verkürzt oder vereinfacht NOₓ-Sensoren oder Stickoxid-Sensoren bezeichnet werden, sind beispielsweise in Reif, K., Deitsche, K-H. et al., Kraftfahrtechnisches Taschenbuch, Springer Vieweg, Wiesbaden, 2014, Seite 1338-1347 beschrieben.

Stickoxid-Sensoren (= NOₓ-Sensoren), die heutzutage in der Automobiltechnik eingesetzt werden, funktionieren nach dem Grenzstromprinzip, analog zu Sauerstoff-Sensoren, wie beispielsweise Lambda Sensoren. Ein solcher Stickoxid-Sensor umfasst eine Nernst-Konzentrationszelle, die auch Referenzzelle genannt wird, ein modifizierte Sauerstoffpumpzelle und eine weitere modifizierte Sauerstoffpumpzelle, die sogenannte NOₓ-Zelle. Eine dem Abgas ausgesetzte äußere Pumpelektrode und eine innere Pumpelektrode in einem ersten Hohlraum, der vom Abgas durch eine Diffusionsbarriere getrennt ist, bilden die Sauerstoffpumpzelle. Im ersten Hohlraum befindet sich auch die Nernstelektrode und in einem Referenzgasraum die Referenzelektrode, die zusammen die Nernstzelle bzw. Referenzzelle bilden. Die NOₓ-Zelle umfasst eine NOₓ-Pumpelektrode und eine Gegenelektrode. Die NOₓ-Pumpelektrode befindet sich in einem zweiten Hohlraum, der mit dem ersten inneren Hohlraum verbunden und von diesem durch eine Diffusionsbarriere getrennt ist. Die Gegenelektrode befindet sich in dem Referenzgasraum. Alle Elektroden in dem ersten und zweiten Hohlraum haben einen gemeinsamen Rückleiter.

Bei Betrieb des Stickoxid-Sensor wird der sogenannten O2-Zelle der Sauerstoff aus dem ersten Hohlraum, der über eine Diffusionsbarriere mit dem Abgas verbunden ist, entfernt. Der dadurch resultierende Pumpstrom ist dann proportional zum Sauerstoffgehalt der Umgebungsluft im Messgas- bzw. Abgasstrom. In der NOₓ-Zelle werden die Stickoxide abgepumpt. Das Stickoxid NOₓ, in der in den zweiten Hohlraum befindlichen Atmosphäre, wird durch Anlegen einer konstanten Pumpspannung reduziert bzw. abgebaut. Der durch Reduktion oder Abbau der Messgaskomponente in dem zweiten Hohlraum erzeugte Sauerstoff, der vorzugsweise aus der Reduktion des Stickoxids NOₓ stammt, wird in einen Referenzgasraum abgepumpt. So hat die angelegte Pumpspannung gegen den Widerstand der NOₓ-Zelle und der Konzentration des Stickoxids NOₓ bzw. Sauerstoffs einen Pumpstrom zur Folge, der proportional zum Gehalt an Stickoxid NOₓ bzw. Sauerstoff ist und das NOₓ-Messsignal darstellt.

Der dabei resultierende Pumpstrom I_{P2} ist somit ein Maß für die NOₓ-Konzentration der Umgebungsluft im Messgas- bzw. Abgasstrom. Bei dieser Anordnung ist es wichtig, dass an der Sauerstoffzelle nicht auch die Stickoxide abgepumpt werden, da sonst an der NOₓ-Zelle kein Signal mehr gemessen werden könnte. Dies wird durch eine Gold-Dotierung der O2-Zelle erreicht. Zusätzlich darf die O2-Zelle nur bei niedrigen Pumpspannungen betrieben werden, da sonst wieder NOₓ-Moleküle dissoziiert würden.

Trotz der Vorteile der aus dem Stand der Technik bekannten Sensoren und Verfahren zum Betreiben derselben, beinhalten diese noch Verbesserungspotenzial. Die Temperatur des Sensorelements wird durch eine Pulsweitenmodulation (PWM) der Heizerversorgung (Spannung, Strom) gesteuert. Die Spannung des PWMs wird über einen Feldeffekttransistor (FET) direkt von der Versorgungspannung (12V) der Sensorsteuereinheit (SCU) abgegriffen. Dadurch liegt in der An-Phase des PWMs die SCU-Versorgungsspannung des Systems an den Heizmäander des Sensorelements in der Sensor-Probe an. Der Strom an NOx-Messsignal ist sehr klein wie beispielsweise. 4,5 µA bei 1500 ppm NOx und damit auch äußerst empfindlich gegenüber Störungen und Einkopplungen. Aufgrund der baulichen Nähe der Heizmäander zu der NOx Zelle wird während der An-Phase des PWM-Signals durch kapazitive Kopplung und Leckströme ein Strom auf die IP2 Leitung/Zelle eingeprägt. Durch diese Störung wird ein Offset zu dem tatsächlichen NOx Wert messbar. Die Anforderungen der Umweltbehörden verlangen eine kontinuierliche und verlässliche Diagnose von Leitungsunterbrechungen der IP2 Leitung.

### Offenbarung der Erfindung

Es wird daher ein Verfahren gemäß Anspruch 1 zum Betreiben eines Sensors zum Nachweis mindestens eines Anteils einer Messgaskomponente mit gebundenem Sauerstoff in einem Messgas vorgeschlagen, welches die Nachteile bekannter Verfahren zum Betreiben dieser Sensoren zumindest weitgehend vermeidet und das in Intervallen von mindestens 500 ms eine sichere und kontinuierliche Diagnose erlaubt, ohne die NOx-Messwerte zu beeinflussen bzw. zu stören.

Bei einem erfindungsgemäßen Verfahren zum Betreiben eines Sensors zum Nachweis mindestens eines Anteils einer Messgaskomponente mit gebundenem Sauerstoff in einem Messgas, insbesondere in einem Abgas einer Verbrennungskraftmaschine, wobei der Sensor ein Sensorelement umfasst, wobei das Sensorelement eine erste Pumpzelle, die eine äußere Pumpelektrode und eine innere Pumpelektrode aufweist und die an einem ersten Hohlraum anliegt, welcher mit dem Messgas in Verbindung steht, eine Referenzzelle, welche eine Nernst-Elektrode und eine Referenzelektrode aufweist und die an einem Referenzgasraum anliegt, und eine zweite Pumpzelle, die eine Pumpelektrode und eine Gegenelektrode aufweist und die an einem zweiten Hohlraum anliegt, wird ein elektronisches Steuergerät, das zumindest über einen ersten gesonderten Anschluss für die erste Pumpzelle, einen zweiten gesonderten Anschluss für die zweite Pumpzelle, einen Anschluss für eine Nernstspannung und über einen gemeinsamen Anschluss verfügt, mit dem Sensorelement verbunden, wobei die äußere Pumpelektrode mittels einer ersten mittels einer ersten elektrisch leitenden Verbindung mit dem ersten gesonderten Anschluss verbunden wird, wobei die innere Pumpelektrode mittels einer zweiten elektrisch leitenden Verbindung mit dem gemeinsamen Anschluss verbunden wird, wobei die Referenzelektrode mittels einer dritten elektrisch leitenden Verbindung mit dem Anschluss für eine Nernstspannung verbunden wird, wobei die Pumpelektrode mittels der zweiten elektrisch leitenden Verbindung mit dem gemeinsamen Anschluss verbunden wird, wobei die Gegenelektrode mittels einer vierten elektrisch leitenden Verbindung mit dem zweiten gesonderten Anschluss verbunden wird, wobei in der vierten elektrisch leitenden Verbindung ein Messwiderstand vorgesehen wird, wobei an dem gemeinsamen Anschluss eine vorbestimmte elektrische Spannung anliegt, wobei mittels des Steuergeräts eine Veränderung der vorbestimmten elektrischen Spannung für eine vorbestimmte Zeit zum Erzeugen eines Messsignals durchgeführt wird.

Durch die Spannungsanregung der gemeinsamen Bezugsgröße aller Zellen des Sensorelements wird ein auswertbares Messsignal erzeugt, beispielsweise an dem Messwiderstand, das die Unterscheidung zwischen einem offenen oder geschlossenen Stromkreis erlaubt. Mit anderen Worten, durch die Änderung der gemeinsamen Bezugsgröße, wird an dem IP2-Messshunt ein IP2-Signal durch eine äußere Anregung, insbesondere bei einem offenen Stromkreis, erzeugt. Damit lässt sich ein offener Stromkreis an der IP2-Leitung der NOx-Zelle auch während des Messbetriebs sicher erkennen. Auch in Betriebszuständen, in denen der Strom IP2 (nahezu) gleich null ist, wie beispielsweise bei 0 ppm NOx, kann eine offene IP2-Leitung detektiert werden.

Bei einer Weiterbildung ist die vorbestimmte Zeit 0,08 ms bis 2 ms und bevorzugt 0,5 ms bis 1 ms. Die exakten Zeiten sind von den Kapazitäten der Hardware und den inneren Kapazitäten der NOx-Zelle abhängig. Dies erlaubt in einer relativ kurzen Zeit ein aussagekräftiges Diagnoseergebnis zum Zustand der vierten elektrisch leitenden Verbindung zu erzielen.

Bei einer Weiterbildung wird die vorbestimmte elektrische Spannung für die vorbestimmte Zeit abgesenkt. Dadurch wird ein Stromfluss an dem Messwiderstand erhöht und kann ausgewertet werden.

Bei einer Weiterbildung wird die vorbestimmte elektrische Spannung für die vorbestimmte Zeit derart abgesenkt, dass eine Spannungsdifferenz zwischen dem zweiten gesonderten Anschluss und dem gemeinsamen Anschluss von 455 mV bis 1500mV und bevorzugt 460 mV bis 500 mV gebildet wird. Dadurch wird an dem Messhunt eine deutlich messbare Stromänderung verursacht. Wird die COM-Spannung abgesenkt, so ist der Strompuls auf der Leitung, bei intakten Leitungen, unsichtbar. Liegt eine Leitungsunterbrechung der IP2-Leitung vor, so ist eine signifikante Stromänderung über dem Messshunt erkennbar. Durch die Absenkung der COM-Spannung, bei offener Leitung, wird die Spannungsdifferenz zwischen U_{P2} und COM-Spannung erhöht (abweichend von den nominellen 450 mV), wodurch an dem NOx Messshunt ein Spannungsabfall der einem Strom entspricht messbar ist. Wird die Absenkung bei intakter Leitung durchgeführt, werden die Ströme aus den umlade Prozessen der Hardware in die NOx Zelle geleitet und sind für den Messshunt kaum sichtbar. Dies bedeutet, dass eine Unterscheidung zwischen einer offenen Leitung und einem 0 ppm NOx-Gehalt sicher detektierbar ist.

Bei einer Weiterbildung wird die vorbestimmte elektrische Spannung für die vorbestimmte Zeit derart abgesenkt, dass eine Spannungsdifferenz zwischen dem zweiten gesonderten Anschluss und dem gemeinsamen Anschluss von 600 mV bis 1500 mV und bevorzugt 650 mV bis 1300 mV gebildet wird. Als Alternative zur geringfügigen Absenkung kann die COM-Spannung auch um eine signifikantere Spannungsdifferenz abgesenkt werden. Die Auswirkungen auf den Messshunt sind Gasgemisch unabhängig und können jeder Zeit bei einer defekten Leitung detektiert werden.

Erfindungsgemäß wird die vierte elektrisch leitende Verbindung als intakt identifiziert, falls das Messsignal für die vorbestimmte Zeit keine Veränderung aufweist, und wird als defekt identifiziert, falls das Messsignal für die vorbestimmte Zeit eine Veränderung aufweist. Beispielsweise lässt sich die Diagnose zum Zustand der IP2-Leitung anhand einer Veränderung des Stromflusses an dem Messshunt der IP2-Leitung realisieren.

Durch kurzzeitiges Absenken der Spannungen am virtuellen Ground (COM), der NOx-Zelle (IP2), O2-Zelle und auch Vs, wird an dem IP2-Messshunt eine deutlich messbare Stromänderung, bei nicht intakter IP2 Leitung, verursacht, nicht aber an den Leitungen Vs und IP1. Wird die COM-Spannung nur für eine geringe Zeit abgesenkt, so ist der Strompuls auf der Leitung, bei intakten Leitungen, kaum sichtbar, da sich die Differenz der beiden Leitungen (IP2 zu COM) kaum unterscheidet und der Strom aus den Umladeprozessen der Hardwareschaltung in die NOx-Zelle fließt und nicht über den Messshunt. Liegt ein "Open Wire"-Fehler vor, so ist eine deutliche Stromänderung über dem Messshunt erkennbar.

In einer von zwei erfindungsgemäßen Alternativen ist das Messsignal ein Spannungsabfall über den Messwiderstand. Dadurch kann ein gut von dem Steuergerät verarbeitbares Signal gewonnen werden.

Es wird zudem ein Computerprogramm vorgeschlagen, welches eingerichtet ist, jeden Schritt des erfindungsgemäßen Verfahrens durchzuführen. Das Computerprogramm ist nicht Teil der Erfindung.

Weiterhin wird ein elektronisches Speichermedium vorgeschlagen, auf welchem ein Computerprogramm zur Durchführung des erfindungsgemäßen Verfahrens gespeichert ist. Das Speichermedium ist auch nicht Teil der Erfindung.

Ein elektronisches Steuergerät ist auch vorgesehen, welches das elektronische Speichermedium mit dem besagten Computerprogramm zur Durchführung des erfindungsgemäßen Verfahrens enthält. Das elektronische Steuergerät ist nicht Teil des beanspruchten Gegenstands.

Schließlich umfasst ein Sensor zum Nachweis mindestens eines Anteils einer Messgaskomponente mit gebundenem Sauerstoff in einem Messgas, insbesondere in einem Abgas einer Verbrennungskraftmaschine, ein Sensorelement, wobei das Sensorelement eine erste Pumpzelle, die einer äußere Pumpelektrode und eine innere Pumpelektrode aufweist und die an einem ersten Hohlraum anliegt, welcher mit dem Messgas in Verbindung steht, eine Referenzzelle, welcher eine Nernst-Elektrode und eine Referenzelektrode aufweist und die an einem Referenzgasraum anliegt, und eine zweite Pumpzelle, die eine Pumpelektrode und eine Gegenelektrode aufweist und die an einem zweiten Hohlraum anliegt, wobei der Sensor weiterhin ein Steuergerät aufweist. Der Sensor ist nicht Teil der Erfindung.

Unter einem Festelektrolyten ist im Rahmen der vorliegenden Erfindung ein Körper oder Gegenstand mit elektrolytischen Eigenschaften, also mit Ionen leitenden Eigenschaften, zu verstehen. Insbesondere kann es sich um einen keramischen Festelektrolyten handeln. Dies umfasst auch das Rohmaterial eines Festelektrolyten und daher die Ausbildung als so genannter Grünling oder Braunling, der erst nach einem Sintern zu einem Festelektrolyten wird. Insbesondere kann der Festelektrolyt als Festelektrolytschicht oder aus mehreren Festelektrolytschichten ausgebildet sei. Unter einer Schicht ist im Rahmen der vorliegenden Erfindung eine einheitliche Masse in flächenhafter Ausdehnung einer gewissen Höhe zu verstehen, die über, unter oder zwischen anderen Elementen liegt.

Unter einer Elektrode ist im Rahmen der vorliegenden Erfindung allgemein ein Element zu verstehen, welches in der Lage ist, den Festelektrolyten derart zu kontaktieren, dass durch den Festelektrolyten und die Elektrode ein Strom aufrechterhalten werden kann. Dementsprechend kann die Elektrode ein Element umfassen, an welchem die Ionen in den Festelektrolyten eingebaut und/oder aus dem Festelektrolyten ausgebaut werden können. Typischerweise umfassen die Elektroden eine Edelmetallelektrode, welche beispielsweise als Metall-Keramik-Elektrode auf dem Festelektrolyten aufgebracht sein kann oder auf andere Weise mit dem Festelektrolyten in Verbindung stehen kann. Typische Elektrodenmaterialien sind Platin-Cermet-Elektroden. Auch andere Edelmetalle, wie beispielsweise Gold oder Palladium, sind jedoch grundsätzlich einsetzbar.

Unter einem Heizelement ist im Rahmen der vorliegenden Erfindung ein Element zu verstehen, das zum Erwärmen des Festelektrolyten und der Elektroden auf mindestens ihre Funktionstemperatur und vorzugsweise auf ihre Betriebstemperatur dient. Die Funktionstemperatur ist diejenige Temperatur, ab der der Festelektrolyt für Ionen leitend wird und die ungefähr 350 °C beträgt. Davon ist die Betriebstemperatur zu unterscheiden, die diejenige Temperatur ist, bei der das Sensorelement üblicherweise betrieben wird und die höher ist als die Funktionstemperatur. Die Betriebstemperatur kann beispielsweise von 700 °C bis 950 °C sein. Das Heizelement kann einen Heizbereich und mindestens eine Zuleitungsbahn umfassen. Unter einem Heizbereich ist im Rahmen der vorliegenden Erfindung der Bereich des Heizelements zu verstehen, der in dem Schichtaufbau entlang einer zu der Oberfläche des Sensorelements senkrechten Richtung mit einer Elektrode überlappt. Üblicherweise erwärmt sich der Heizbereich während des Betriebs stärker als die Zuleitungsbahn, so dass diese unterscheidbar sind. Die unterschiedliche Erwärmung kann beispielsweise dadurch realisiert werden, dass der Heizbereich einen höheren elektrischen Widerstand aufweist als die Zuleitungsbahn. Der Heizbereich und/oder die Zuleitung sind beispielsweise als elektrische Widerstandsbahn ausgebildet und erwärmen sich durch Anlegen einer elektrischen Spannung. Das Heizelement kann beispielsweise aus einem Platin-Cermet hergestellt sein.

Durch das Absenken der COM Spannung wird die UP2 Spannung um die gleiche Differenz, referenziert zu GND, abgesenkt. Dadurch entstehen im Kondensator der IP2-Leitung eine Ladungsteilchenüberkapazität, die abfließen muss und je nach dem ob die IP2 Zelle verbunden ist oder nicht, fließt der Strom entsprechend ab. Bei verbunden Probe in die IP2-Zell rein, bei nicht verbundener Leitung in die Messvorrichtung hinein, wo der Strom als Spannungsabfall über den Shunt vom Steuergerät gemessen werden kann.

Die Erfindung ist gut und einfach durch die Überwachung der elektrischen Signale auf der COM-Leitung nachweisbar. Werden während des normalen Messbetriebs spezielle ein Spannungsänderung/Stromänderung auf der Leitung zwischen Sensor und Steuergerät mit einem Oszilloskop gemessen, so werden die in dieser Erfindung beschriebenen Schaltungen und Verfahren verwendet.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:
Figur 1 einen prinzipiellen Aufbau eines Sensors,
Figur 2 einen Teil des Sensors mit einem Teil eines daran angeschlossenen Steuergeräts,
Figur 3 die zweite Pumpzelle und einen Teil des Steuergeräts als elektrisches Schaltbild,
Figur 4 ein erstes Beispiel für einen zeitlichen Verlauf von elektrischen Spannungen und Messsignal bei dem Sensor bei intakter vierter elektrisch leitender Verbindung,
Figur 5 ein zweites Beispiel für einen zeitlichen Verlauf von elektrischen Spannungen und Messsignal bei dem Sensor bei defekter vierter elektrisch leitender Verbindung und
Figur 6 ein drittes Beispiel für einen zeitlichen Verlauf von elektrischen Spannungen, elektrischen Strömen und Messsignal bei dem Sensor mit intakter vierter elektrischer Leitung.
Figur 7 ein viertes Beispiel für einen zeitlichen Verlauf von elektrischen Spannungen (NOx-Pumpspannung), elektrischen Strömen und Messsignal bei dem Sensor mit defekter vierter elektrischer Leitung.

### Ausführungsformen der Erfindung

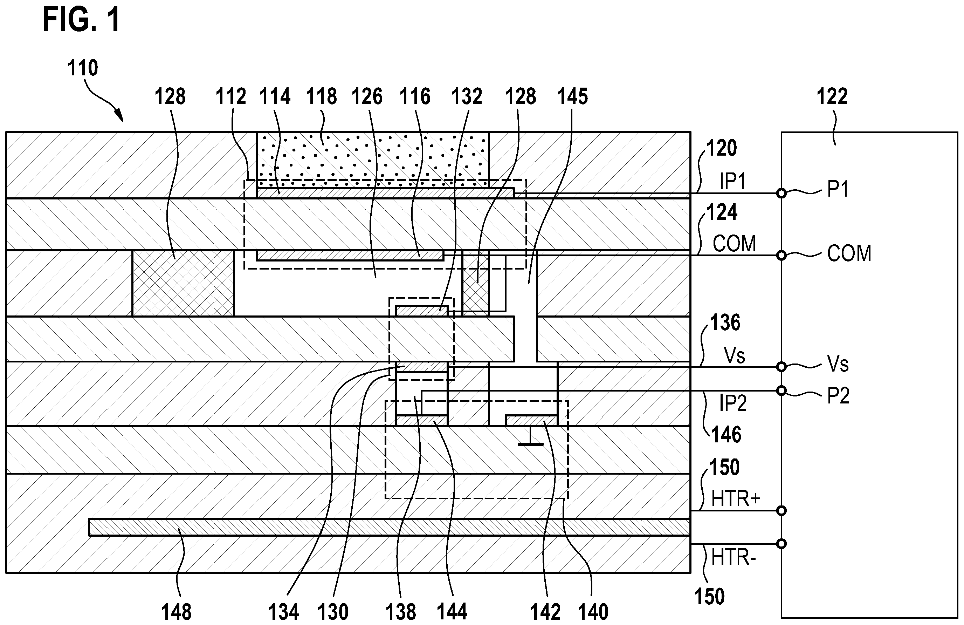

Figur 1 zeigt einen prinzipiellen Aufbau eines Sensors 100, welcher zur Durchführung des erfindungsgemäßen Verfahrens besonders geeignet ist.

Der Sensor 100, welcher zum Nachweis mindestens eines Anteils einer Messgaskomponente mit gebundenem Sauerstoff, im Folgenden beispielhaft als Stickoxid NOx bezeichnet, in einem Gasgemisch, beispielhaft einem Abgas einer Verbrennungskraftmaschine, eingerichtet ist, umfasst hierzu ein Sensorelement 110 eine erste Pumpzelle 112, welche zwischen einer äußeren Pumpelektrode 114 und einer inneren Pumpelektrode 116 ausgebildet ist. Die äußere Pumpelektrode 114, welche mittels einer porösen Aluminiumoxidschicht 118 von der Umgebung des Sensors 100 getrennt ist, verfügt hierbei über eine erste elektrisch leitende Verbindung 120, über welche sich ein erster Pumpstrom I_{P1} in der ersten Pumpzelle 112 erzeugen lässt. Die erste elektrisch leitende Verbindung 120 ist hierzu mit einem ersten Anschluss P1 eines externen elektronischen Steuergeräts 122 verbunden. Um einen vollständigen Stromkreis zu erhalten, verfügt die innere Pumpelektrode 116 ebenfalls über eine zweite elektrisch leitende Verbindung 124, welche zu einem gemeinsamen Anschluss COM des externen elektronischen Steuergeräts 122 führt. Die erste Pumpzelle 112 liegt an einem ersten Hohlraum 126 an, der sich im Inneren des Sensorelements 110 befindet und mit dem Messgas in Verbindung steht. Durch Erzeugen des ersten Pumpstroms I_{P1} in der ersten Pumpzelle 112 lässt sich ein erster Anteil von Sauerstoffionen, welche aus molekularem Sauerstoff aus dem Gasgemisch gebildet werden, zwischen dem ersten Hohlraum 126 und der Umgebung des Sensors 100 transportieren. In dem Eintrittsweg aus der Umgebung zu dem ersten Hohlraum 126 sind zwei Diffusionsbarrieren 128 vorhanden.

Das Sensorelement 110 weist weiterhin eine elektrische Referenzzelle 130 auf, welche eine Nernst-Elektrode 132 und eine Referenzelektrode 134 aufweist.

Während die Nernst-Elektrode 132 über die zweite elektrisch leitende Verbindung 124 zusammen mit der inneren Pumpelektrode 116 zu dem gemeinsamen Anschluss COM verfügt, weist die Referenzelektrode 134 eine gesonderte dritte elektrisch leitende Verbindung 136 zu einem Anschluss Vs des externen elektronischen Steuergeräts 122 für die Nernstspannung Vs auf. Die Referenzzelle 130 liegt an einem Referenzgasraum 138 an. Ein zweiter Anteil der Sauerstoffionen aus dem ersten Hohlraum 126 und/oder aus der Umgebung des Sensors 100 wird in den Referenzgasraum 138 durch Anlegen eines Referenz-Pumpstroms zwischen dem Anschluss Vs und dem gemeinsamen Anschluss COM transportiert. Hierbei wird der Wert für den Referenz-Pumpstrom derart eingestellt, dass sich ein festgelegter Anteil der Sauerstoffionen in dem Referenzgasraum 138 ausbildet. Vorzugsweise wird in diesem Zusammenhang auch der Wert für den ersten Pumpstrom I_{P1} derart eingestellt, dass sich ein festgelegtes Verhältnis zwischen dem ersten Anteil der Sauerstoffionen in dem ersten Hohlraum 126 und dem zweiten Anteil der Sauerstoffionen in dem Referenzgasraum 138 ergibt.

Die in dem Gasgemisch weiterhin enthaltene Messgaskomponente Stickoxid NOₓ mit dem gebundenen Sauerstoff gelangt, insbesondere durch Diffusion, weitgehend unbeeinflusst in eine zweite Pumpzelle 140 des Sensorelements 110, welche auch als "NOₓ-Pumpzelle" bezeichnet werden kann. Die zweite Pumpzelle 140 weist eine NOₓ-Pumpelektrode 142 und eine NOₓ-Gegenelektrode 144 auf und liegt an einem zweiten Hohlraum 145 im Inneren des Sensorelements 110 an. Der zweite Hohlraum 145 ist von dem ersten Hohlraum 126 durch eine der Diffusionsbarrieren 128 getrennt. Wenigstens eine der beiden Elektroden NOₓ-Pumpelektrode 142 und/oder NOₓ-Gegenelektrode 144 sind derart ausgestaltet, dass bei Anlegen einer Spannung mittels Katalyse aus der Messgaskomponente NOₓ weiterer molekularer Sauerstoff erzeugt werden kann, welcher in der zweiten Pumpzelle 140 gebildet wird.

Die NOₓ-Pumpelektrode 142 ist über eine elektrisch leitende Verbindung mit dem gemeinsamen Anschluss COM verbunden. Auch wenn dies nicht näher dargestellt ist, ist diese elektrisch leitende Verbindung mit der zweiten elektrisch leitenden Verbindung 124 verbunden bzw. Teil derselben. Die NOₓ-Gegenelektrode 144 weist eine vierte elektrisch leitende Verbindung 146 auf, über welche ein zweiter Pumpstrom I_{P2} an die zweite Pumpzelle 140 angelegt werden kann. Die vierte elektrisch leitende Verbindung 146 ist hierzu mit einem zweiten Anschluss P2 des externen elektronischen Steuergeräts 122 verbunden. Bei Anlegen eines zweiten Pumpstroms I_{P2} an die zweite Pumpzelle 140 wird ein Anteil von weiteren Sauerstoffionen, welche aus dem weiteren molekularen Sauerstoff gebildet wurden, in den Referenzgasraum 138 transportiert.

Das Sensorelement 110 verfügt weiterhin über ein Heizelement 148, welches mittels zweier Zuleitungen 150 mit Anschlüssen HTR+ und HTR- des Steuergeräts 122 verbunden ist, über welche ein Heizstrom in das Heizelement 148 eingebracht werden kann, welches mittels Erzeugen einer Heizleistung das Sensorelement 110 auf die gewünschte Temperatur bringen kann.

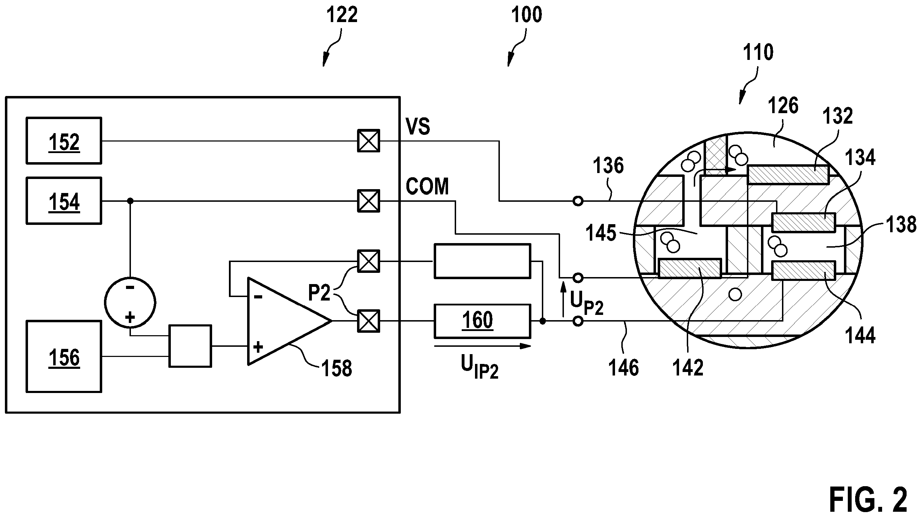

Figur 2 zeigt einen Teil des Sensors 100 mit einem Teil eines daran angeschlossenen Steuergeräts 122. Das Steuergerät 122 weist einen Analog-Digital-Wandler 152 auf, der mit dem Anschluss Vs für die Nernstspannung verbunden ist. Das Steuergerät 122 weist weiterhin eine COM-Spannungsquelle 154 auf, die mit dem gemeinsamen Anschluss COM verbunden ist. Das Steuergerät 122 weist weiterhin eine Anregungssignalquelle 156 auf, die mit dem Pluspol eines Operationsverstärkers 158 verbunden ist. Bei dem gezeigten Ausführungsbeispiel ist der Operationsverstärker 158 ein Spannungsfolger. Die COM-Spannungsquelle 154 ist ebenfalls mit dem Pluspol des Operationsverstärkers 158 verbunden. Der Operationsverstärker 158 ist wiederum mit dem zweiten Anschluss P2 verbunden. In der vierten elektrischen Leitung 146 ist zwischen dem zweiten Anschluss P2 und der Gegenelektrode 144 ein Messwiderstand 160 angeordnet.

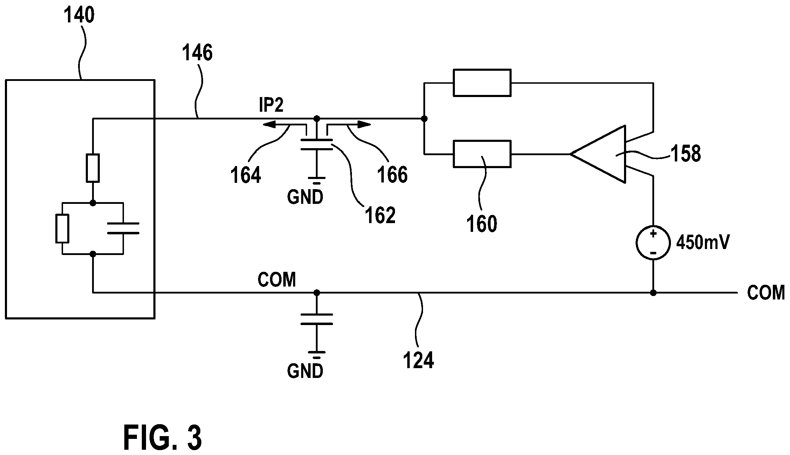

Figur 3 zeigt die zweite Pumpzelle 144 und einen Teil des Steuergeräts 122 als elektrisches Schaltbild. Figur 3 dient dabei zur Erklärung der technischen Zusammenhänge, auf denen die vorliegende Erfindung beruht. Vereinfacht ist die zweite Pumpzelle 140 als Parallel- und Reihenschaltung von Kondensatoren und Widerständen dargestellt. In Figur 3 ist die zweite elektrisch leitende Verbindung 124 zu erkennen, die von der zweiten Pumpzelle 140 bzw. der Pumpelektrode 142 zu dem gemeinsamen Anschluss COM führt. Weiterhin ist in Figur 3 die vierte elektrisch leitende Verbindung 146 zu erkennen, die von der zweiten Pumpzelle 140 bzw. der NOₓ-Gegenelektrode 144 zu dem Messwiderstand 160 führt. Der Operationsverstärker 158 ist ebenfalls in Figur 3 dargestellt, der wiederum mit der COM-Spannungsquelle 154 verbunden ist. In der vierten elektrisch leitenden Verbindung 146 ist zwischen dem Messwiderstand 160 und der zweiten Pumpzelle 140 ein Kondensator 162 angeordnet, der wiederum mit der Masse GND des Steuergeräts 122 verbunden ist. Der gemeinsame Anschluss COM hat gegenüber der Masse GND des Steuergeräts 122 einen Potentialunterschied von beispielsweise 2,25 V. An dem gemeinsamen Anschluss COM liegt eine vorbestimmte elektrische Spannung U_{COM} an. Durch Verändern der vorbestimmten elektrischen Spannung U_{COM}, wie beispielsweise Absenken, wird eine Spannungsdifferenz U_{P2} zwischen dem zweiten gesonderten Anschluss P2 und dem gemeinsamen Anschluss COM um die gleiche Differenz, referenziert zur Masse GND, verändert bzw. abgesenkt. Dadurch entsteht im Kondensator 162 eine Ladungsträgerüberkapazität, die abfließen muss. Je nach dem ob die zweite Pumpzelle 140 verbunden ist oder nicht, d.h. die vierte elektrisch leitende Verbindung 146 intakt oder defekt ist, fließt der Strom entsprechend ab. Bei verbundener zweiter Pumpzelle 140 bzw. intakter vierter elektrisch leitender Verbindung 146 fließt der Strom in die zweite Pumpzelle 140 hinein, wie durch einen ersten Pfeil 164 angedeutet ist. Bei nicht verbundener zweiter Pumpzelle 140 bzw. defekter vierter elektrisch leitender Verbindung 146 fließt der Strom in die Messvorrichtung des Steuergeräts 122 hinein, wo der Strom als Spannungsabfall über den Messwiderstand 160 vom Steuergerät 122 gemessen werden kann, wie durch einen zweiten Pfeil 166 angedeutet ist.

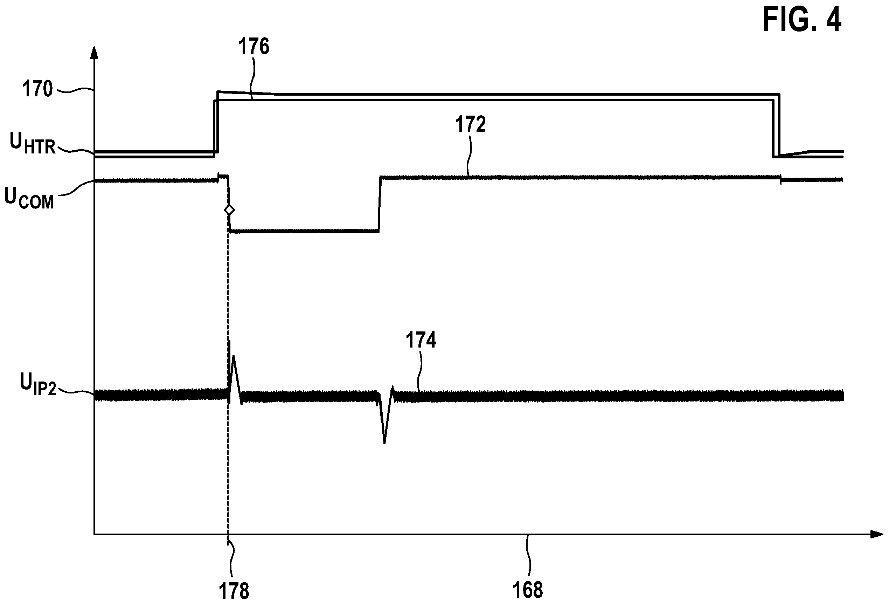

Figur 4 zeigt ein erstes Beispiel für einen zeitlichen Verlauf von elektrischen Spannungen und Messsignal bei dem Sensor 100 bei intakter vierter elektrisch leitender Verbindung 146. Auf der X-Achse 168 ist die Zeit aufgetragen. Auf der Y-Achse 170 sind die an das Heizelement 148 angelegte elektrische Heizspannung U_{HTR}, die an dem gemeinsamen Anschluss COM anliegende vorbestimmte elektrische Spannung U_{COM} und der Spannungsabfall U_{IP2} über den Messwiderstand 160 aufgetragen. Die Kurve 172 stellt den zeitlichen der Verlauf der vorbestimmten elektrischen Spannung U_{COM} dar, die Kurve 174 stellt das Messsignal 174 in Form des zeitlichen Verlaufs des Spannungsabfalls U_{IP2} über den Messwiderstand 160 dar und die Kurve 176 stellt den zeitlichen Verlauf der elektrischen Heizspannung U_{HTR} dar. Zur Durchführung einer Diagnose der vierten elektrischen Leitung 146, die den zweiten gesonderten Anschluss P2 mit der Pumpzelle 140 bzw. der Gegenelektrode 144 verbindet, wird mittels des Steuergeräts 122 eine Veränderung der vorbestimmten elektrischen Spannung U_{COM} zum Erzeugen eines Messsignals an dem Messwiderstand 160 durchgeführt. Die Spannungsanregung umfasst eine Veränderung der vorbestimmten elektrischen Spannung U_{COM} für eine vorbestimmte Zeit. Die vorbestimmte Zeit ist 0,08 ms bis 1 ms und bevorzugt 0,5 ms bis 1 ms. Diese Zeiten sind in Abhängigkeit von der verwendeten Hardwareschaltung und können sich je nach Änderung der Kapazitäten und Impedanzen im Sensorelement 110 und in der Messhardware unterscheiden, bzw. die hier angegebenen Zeiten über- oder unterschreiten. Bei dem gezeigten Beispiel ist die vorbestimmte Zeit 1 ms. Bei dem gezeigten Beispiel wird zum Zeitpunkt 178 die vorbestimmte elektrische Spannung U_{COM} für die vorbestimmte Zeit derart abgesenkt wird, dass eine Spannungsdifferenz U_{P2} zwischen dem zweiten gesonderten Anschluss P2 und dem gemeinsamen Anschluss COM von 450 mV bis 2500 mV und bevorzugt 450 mV bis 1500 mV gebildet wird. Beispielsweise wird eine Spannungsdifferenz U_{P2} von 465 mV gebildet. Der Zeitpunkt 178 der Absenkung der vorbestimmten elektrische Spannung U_{COM} kann zu einem Zeitpunkt liegen, bei dem an das Heizelement 148 eine elektrische Heizspannung U_{HTR} angelegt wird bzw. die elektrische Heizspannung U_{HTR} erhöht wird und das Heizelement 148 somit heizt. Die vierte elektrisch leitende Verbindung 146 wird als intakt identifiziert, falls das Messsignal 174 für die vorbestimmte Zeit keine Veränderung aufweist. Liegt keine Unterbrechung der vierten elektrisch leitenden Verbindung 146 vor, so kann durch die Umladeprozesse der Absenkung der vorbestimmten elektrischen Spannung U_{COM} in der Hardware des Steuergeräts 122 und der daraus resultierenden Stromfluss bei intakter vierter elektrisch leitender Verbindung 146 über das Sensorelement 110 abfließen. Die Spannungsänderung und der daraus resultierenden Stromfluss über die vierte elektrisch leitende Verbindung 146 kann nicht mehr über den Messwiderstand 160 gemessen werden. Bei dem gezeigten Beispiel, liegt ein geschlossener Stromkreis vor, so dass das Messsignal 174 ab dem Zeitpunkt 178 unverändert für die vorbestimmte Zeit ist.

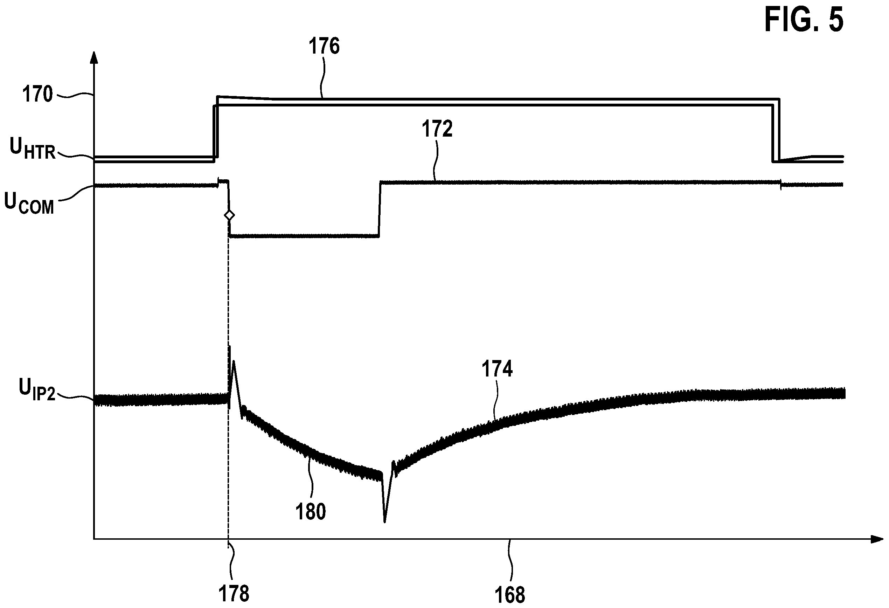

Figur 5 zeigt ein zweites Beispiel für einen zeitlichen Verlauf von elektrischen Spannungen und Messsignal bei dem Sensor 100 bei defekter vierter elektrisch leitender Verbindung 146. Nachstehend werden lediglich die Unterschiede zu dem in Figur 4 gezeigten Beispiel erläutert und gleiche Bauteile bzw. Merkmale sind mit gleichen Bezugszeichen versehen. Die vierte elektrisch leitende Verbindung 146 wird als defekt identifiziert, falls das Messsignal 174 für die vorbestimmte Zeit eine Veränderung aufweist. Liegt eine Unterbrechung der vierten elektrisch leitenden Verbindung 146 vor, so wird durch die Spannungsänderung an COM ein deutlicher Stromfluss auf der vierten elektrisch leitenden Verbindung 146 über dem Messwiderstand 160 verursacht. Bei dem gezeigten Beispiel, liegt ein offener Stromkreis vor, so dass das Messsignal 174 ab dem Zeitpunkt 178 einen deutlichen Abfall 180 für die vorbestimmte Zeit aufweist.

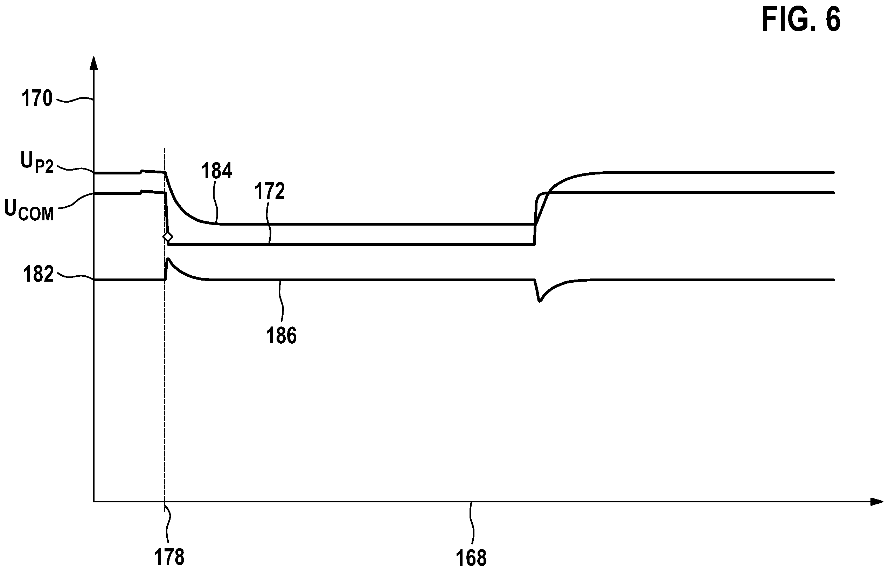

Figur 6 zeigt ein drittes Beispiel für einen zeitlichen Verlauf von elektrischen Spannungen und Messsignal bei dem Sensor 100 bei intakter vierter elektrisch leitender Verbindung 146. Auf der X-Achse 168 ist die Zeit aufgetragen. Auf der Y-Achse 170 sind von oben nach unten gesehen die an die zweite Pumpzelle 140 angelegte elektrische Spannung U_{P2}, die an dem gemeinsamen Anschluss COM anliegende vorbestimmte elektrische Spannung U_{COM} und eine Differenz 182 zwischen der die an die zweite Pumpzelle 140 angelegten elektrischen Spannung U_{P2} und der vorbestimmten elektrischen Spannung U_{COM} aufgetragen. Die Kurve 172 stellt den zeitlichen der Verlauf der vorbestimmten elektrischen Spannung U_{COM} dar, die Kurve 184 stellt den zeitlichen Verlauf der an die zweite Pumpzelle 140 angelegten elektrischen Spannung U_{P2} dar und die Kurve 186 stellt das Messsignal 174 in Form des zeitlichen Verlaufs der Differenz 182 zwischen der die an die zweite Pumpzelle 140 angelegten elektrischen Spannung U_{P2} und der vorbestimmten elektrischen Spannung U_{COM} dar. Zur Durchführung einer Diagnose der vierten elektrischen Leitung 146, die den zweiten gesonderten Anschluss P2 mit der Pumpzelle 140 bzw. der Gegenelektrode 144 verbindet, wird mittels des Steuergeräts 122 Veränderung der vorbestimmten elektrischen Spannung U_{COM} für eine vorbestimmte Zeit zum Erzeugen eines Messsignals durchgeführt. Die vorbestimmte Zeit ist 0,08 ms bis 1 ms und bevorzugt 0,5 ms bis 1 ms. Diese Zeiten sind in Abhängigkeit von der Verwendeten Hardwareschaltung und können sich je nach Änderung der Kapazitäten und Impedanzen im Sensorelement 110 und in der Messhardware des Steuergeräts 122 unterscheiden, bzw. die hier angegebenen Zeiten über- oder unterschreiten. Bei dem gezeigten Beispiel ist die vorbestimmte Zeit 1 ms. Bei dem gezeigten Beispiel wird zum Zeitpunkt 178 die vorbestimmte elektrische Spannung U_{COM} für die vorbestimmte Zeit derart abgesenkt wird, dass eine Spannungsdifferenz U_{P2} zwischen dem zweiten gesonderten Anschluss P2 und dem gemeinsamen Anschluss COM von 450 mV bis 2500 mV und bevorzugt 460 mV bis 1500 mV gebildet wird. Beispielsweise wird eine Spannungsdifferenz U_{P2} von 750 mV gebildet.

Um die zweite Pumpzelle 140 treiben zu können, muss zwischen der Pumpelektrode 142 und der Gegenelektrode 144 eine ausreichend große, auf einen festen Wert geregelte Spannung U_{P2} anliegen. Diese Spannung U_{P2} an der zweiten Pumpzelle 140 kann zum Beispiel 450 mV gegen COM sein. Die vierte elektrisch leitende Verbindung 146 wird als intakt identifiziert, falls das Messsignal 174 für die vorbestimmte Zeit keine Veränderung aufweist, d.h. die Differenz 182 bei 450 mV liegt. Liegt keine Unterbrechung der vierten elektrisch leitenden Verbindung 146 vor, so kann über das Sensorelement 110, die durch die Hardwareschaltung des Steuergeräts 122 verursachten Umladeprozesse der Absenkung der vorbestimmten elektrischen Spannung U_{COM} der Strom durch das Sensorelement 110 abfließen und die Spannungsänderung kann der durch die Operationsverstärker 158 gestellten Spannung innerhalb kürzester Zeit von beispielsweise 10 bis 15 µS je nach Alterung der zweiten Pumpzelle 140 bzw. Fertigungstoleranzen auf die angestrebten 450 mV folgen. Bei dem gezeigten Beispiel, liegt ein geschlossener Stromkreis und somit eine intakte vierte elektrisch leitende Verbindung 146 vor, so dass das Messsignal 174 ab dem Zeitpunkt 178 mit einer unwesentlichen Verzögerung von 15 bis 20 µS nach Absenkung der vorbestimmten elektrischen Spannung U_{COM} unverändert für die vorbestimmte Zeit ist.

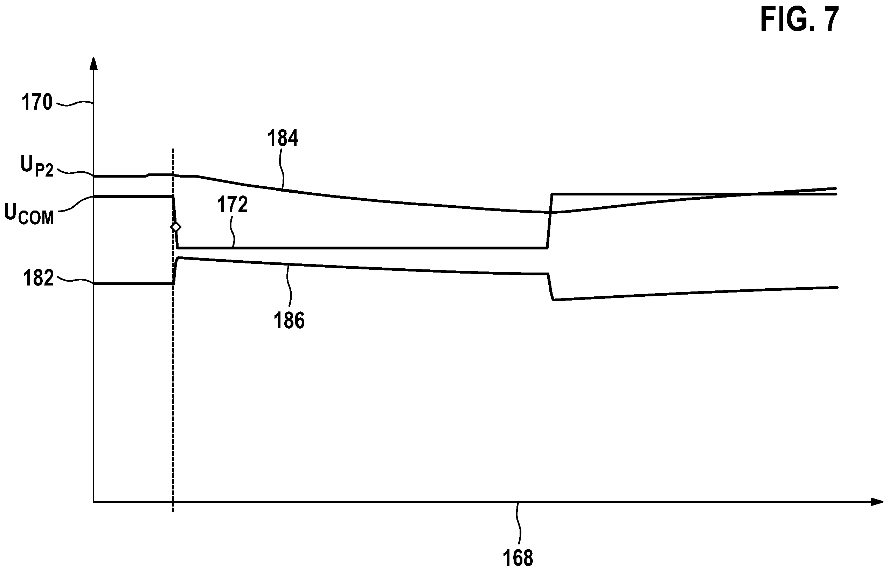

Figur 7 zeigt ein viertes Beispiel für einen zeitlichen Verlauf von elektrischen Spannungen und Messsignal bei dem Sensor 100 bei defekter vierter elektrisch leitender Verbindung 146. Nachstehend werden lediglich die Unterschiede zu dem in Figur 6 gezeigten Beispiel erläutert und gleiche Bauteile bzw. Merkmale sind mit gleichen Bezugszeichen versehen. Die vierte elektrisch leitende Verbindung 146 wird als defekt identifiziert, falls das Messsignal 168 für die vorbestimmte Zeit eine Veränderung aufweist. Liegt eine Unterbrechung der vierten elektrisch leitenden Verbindung 146 vor, so wird durch die Spannungsänderung an COM ein deutlicher Stromfluss auf der vierten elektrisch leitenden Verbindung 146 über dem Messwiderstand 160 verursacht. Bei dem gezeigten Beispiel, liegt ein offener Stromkreis vor, so dass das Messsignal 174 ab dem Zeitpunkt 178 ein deutlich höheres Potential von beispielsweise 750 mV anstatt 450 mV im Normalfall für die vorbestimmte Zeit aufweist. Es wird explizit betont, dass für die Beurteilung des Zustands der vierten elektrisch leitenden Verbindung eine Beobachtung des zeitlichen Verlaufs der an die zweite Pumpzelle 140 angelegten elektrischen Spannung U_{P2} alleine ausreicht, ohne dass die Differenz 182 betrachtet werden muss.

## Patentansprüche

1. Verfahren zum Betreiben eines Sensors (100) zum Nachweis mindestens eines Anteils einer Messgaskomponente mit gebundenem Sauerstoff in einem Messgas, insbesondere in einem Abgas einer Verbrennungskraftmaschine, umfassend ein Sensorelement (110), wobei das Sensorelement (110) eine erste Pumpzelle (112), die eine äußere Pumpelektrode (114) und eine innere Pumpelektrode (116) aufweist und die an einem ersten Hohlraum (126) anliegt, welcher mit dem Messgas in Verbindung steht, eine Referenzzelle (130), welche eine Nernst-Elektrode (132) und eine Referenzelektrode (134) aufweist und die an einem Referenzgasraum (138) anliegt, und eine zweite Pumpzelle (140), die eine Pumpelektrode (142) und eine Gegenelektrode (144) aufweist und die an einem zweiten Hohlraum (145) anliegt, wobei ein elektronisches Steuergerät (122), das zumindest über einen ersten gesonderten Anschluss (P1) für die erste Pumpzelle (112), einen zweiten gesonderten Anschluss (P2) für die zweite Pumpzelle (140), einen Anschluss für eine Nernstspannung (Vs) und über einen gemeinsamen Anschluss (COM) verfügt, mit dem Sensorelement (110) verbunden wird, wobei die äußere Pumpelektrode (114) mittels einer ersten mittels einer ersten elektrisch leitenden Verbindung (120) mit dem ersten gesonderten Anschluss (P1) verbunden wird, wobei die innere Pumpelektrode (116) mittels einer zweiten elektrisch leitenden Verbindung (124) mit dem gemeinsamen Anschluss (COM) verbunden wird, wobei die Referenzelektrode (134) mittels einer dritten elektrisch leitenden Verbindung (136) mit dem Anschluss für eine Nernstspannung (Vs) verbunden wird, wobei die Pumpelektrode (142) mittels der zweiten elektrisch leitenden Verbindung (124) mit dem gemeinsamen Anschluss (COM) verbunden wird, wobei die Gegenelektrode (144) mittels einer vierten elektrisch leitenden Verbindung (146) mit dem zweiten gesonderten Anschluss (P2) verbunden wird, wobei in der vierten elektrisch leitenden Verbindung (146) ein Messwiderstand (160) vorgesehen wird, wobei an dem gemeinsamen Anschluss (COM) eine vorbestimmte elektrische Spannung (U_{COM}) anliegt, wobei die vierte elektrisch leitende Verbindung (146) zwischen dem Messwiderstand (160) und der zweiten Pumpzelle (140) mit einem Kondensator (162) verbunden ist, der weiterhin mit einer Masse (GND) des Steuergeräts (122) verbunden ist, wobei mittels des Steuergeräts (122) eine Veränderung der vorbestimmten elektrischen Spannung (U_{COM}) für eine vorbestimmte Zeit zum Erzeugen eines Messsignals (168) durchgeführt wird, wobei das Messsignal (168) gegeben ist durch den zeitlichen Verlauf eines Spannungsabfalls (U_{IP2}) über dem Messwiderstand (160) oder durch den zeitlichen Verlauf einer Differenz (182) zwischen einer an die zweite Pumpzelle (140) angelegten elektrischen Spannung (U_{P2}) und der vorbestimmten elektrischen Spannung (U_{COM}), wobei die vierte elektrisch leitende Verbindung (146) als intakt identifiziert wird, falls das Messsignal (168) für die vorbestimmte Zeit keine Veränderung aufweist, und als defekt identifiziert wird, falls das Messsignal (168) für die vorbestimmte Zeit eine Veränderung aufweist.

2. Verfahren nach Anspruch 1, wobei die vorbestimmte Zeit 0,08 ms bis 1 ms und bevorzugt 0,5 ms bis 1 ms ist.

3. Verfahren nach Anspruch 1 oder 2, wobei die vorbestimmte elektrische Spannung (U_{COM}) für die vorbestimmte Zeit abgesenkt wird.

4. Verfahren nach Anspruch 3, wobei die vorbestimmte elektrische Spannung (U_{COM}) für die vorbestimmte Zeit derart abgesenkt wird, dass eine Spannungsdifferenz (U_{P2}) zwischen dem zweiten gesonderten Anschluss (P2) und dem gemeinsamen Anschluss (COM) von 450 mV bis 1,2 V gebildet wird.

5. Verfahren nach Anspruch 3, wobei die vorbestimmte elektrische Spannung (U_{COM}) für die vorbestimmte Zeit derart abgesenkt wird, dass eine Spannungsdifferenz (U_{P2}) zwischen dem zweiten gesonderten Anschluss (P2) und dem gemeinsamen Anschluss (COM) von 450 mV bis 1500 mV und bevorzugt 600 mV bis 1300 mV gebildet wird.

## Claims

1. Method for operating a sensor (100) for detecting at least one portion of a measurement gas component with bound oxygen in a measurement gas, in particular in an exhaust gas of an internal combustion engine, comprising a sensor element (110), wherein the sensor element (110) has a first pump cell (112) which has an outer pump electrode (114) and an inner pump electrode (116) and is present at a first cavity (126) connected to the measurement gas, a reference cell (130) which has a Nernst electrode (132) and a reference electrode (134) and is present at a reference gas space (138), and a second pump cell (140) which has a pump electrode (142) and a counter-electrode (144) and is present at a second cavity (145), wherein an electronic control device (122), which has at least a first separate terminal (P1) for the first pump cell (112), a second separate terminal (P2) for the second pump cell (140), a terminal for a Nernst voltage (Vs) and a common terminal (COM), is connected to the sensor element (110), wherein the outer pump electrode (114) is connected to the first separate terminal (P1) by means of a first electrically conductive connection (120), wherein the inner pump electrode (116) is connected to the common terminal (COM) by means of a second electrically conductive connection (124), wherein the reference electrode (134) is connected to the terminal for a Nernst voltage (Vs) by means of a third electrically conductive connection (136), wherein the pump electrode (142) is connected to the common terminal (COM) by means of the second electrically conductive connection (124), wherein the counter-electrode (144) is connected to the second separate terminal (P2) by means of a fourth electrically conductive connection (146), wherein a measurement resistor (160) is provided in the fourth electrically conductive connection (146), wherein a predetermined electrical voltage (U_{COM}) is applied to the common terminal (COM), wherein the fourth electrically conductive connection (146) is connected, between the measurement resistor (160) and the second pump cell (140), to a capacitor (162) which is also connected to an earth (GND) of the control device (122), wherein the control device (122) is used to change the predetermined electrical voltage (U_{COM}) for a predetermined time in order to generate a measurement signal (168), wherein the measurement signal (168) is given by the temporal profile of a voltage drop (U_{IP2}) across the measurement resistor (160) or by the temporal profile of a difference (182) between an electrical voltage (U_{P2}) applied to the second pump cell (140) and the predetermined electrical voltage (U_{COM}), wherein the fourth electrically conductive connection (146) is identified as intact if the measurement signal (168) does not have any change for the predetermined time and is identified as defective if the measurement signal (168) has a change for the predetermined time.

2. Method according to Claim 1, wherein the predetermined time is 0.08 ms to 1 ms and preferably 0.5 ms to 1 ms.

3. Method according to Claim 1 or 2, wherein the predetermined electrical voltage (U_{COM}) is reduced for the predetermined time.

4. Method according to Claim 3, wherein the predetermined electrical voltage (U_{COM}) is reduced for the predetermined time in such a manner that a voltage difference (U_{P2}) of 450 mV to 1.2 V is formed between the second separate terminal (P2) and the common terminal (COM).

5. Method according to Claim 3, wherein the predetermined electrical voltage (U_{COM}) is reduced for the predetermined time in such a manner that a voltage difference (U_{P2}) of 450 mV to 1500 mV and preferably 600 mV to 1300 mV is formed between the second separate terminal (P2) and the common terminal (COM).

## Revendications

1. Procédé permettant de faire fonctionner un capteur (100) pour détecter au moins une fraction d'un composant de gaz de mesure avec de l'oxygène lié dans un gaz de mesure, en particulier dans un gaz d'échappement d'un moteur à combustion interne, comprenant un élément capteur (110), l'élément capteur (110) présentant une première cellule de pompage (112) qui présente une électrode de pompage extérieure (114) et une électrode de pompage intérieure (116) et qui est adjacente à une première cavité (126) qui est en communication avec le gaz de mesure, une cellule de référence (130) qui présente une électrode de Nernst (132) et une électrode de référence (134) et qui est adjacente à une chambre à gaz de référence (138), et une deuxième cellule de pompage (140) qui présente une électrode de pompage (142) et une contre-électrode (144) et qui est adjacente à une deuxième cavité (145), un appareil de commande électronique (122), qui dispose au moins d'une première borne séparée (P1) pour la première cellule de pompage (112), d'une deuxième borne séparée (P2) pour la deuxième cellule de pompage (140), d'une borne pour une tension de Nernst (Vs) et d'une borne commune (COM), étant relié à l'élément capteur (110), l'électrode de pompage extérieure (114) étant reliée à la première borne séparée (P1) au moyen d'une première liaison électriquement conductrice (120), l'électrode de pompage intérieure (116) étant reliée à la borne commune (COM) au moyen d'une deuxième liaison électriquement conductrice (124), l'électrode de référence (134) étant reliée à la borne pour une tension de Nernst (Vs) au moyen d'une troisième liaison électriquement conductrice (136), l'électrode de pompage (142) étant reliée à la borne commune (COM) au moyen de la deuxième liaison électriquement conductrice (124), la contre-électrode (144) étant reliée à la deuxième borne séparée (P2) au moyen d'une quatrième liaison électriquement conductrice (146), une résistance de mesure (160) étant prévue dans la quatrième liaison électriquement conductrice (146), une tension électrique prédéterminée (U_{COM}) étant appliquée à la borne commune (COM), la quatrième liaison électriquement conductrice (146) entre la résistance de mesure (160) et la deuxième cellule de pompage (140) étant reliée à un condensateur (162) qui est en outre relié à une masse (GND) de l'appareil de commande (122), dans lequel, au moyen de l'appareil de commande (122), une variation de la tension électrique prédéterminée (U_{COM}) est effectuée pendant une durée prédéterminée pour générer un signal de mesure (168), le signal de mesure (168) étant donné par la courbe dans le temps d'une chute de tension (U_{IP2}) aux bornes de la résistance de mesure (160) ou par la courbe dans le temps d'une différence (182) entre une tension électrique (U_{P2}) appliquée à la deuxième cellule de pompage (140) et la tension électrique prédéterminée (U_{COM}), la quatrième liaison électriquement conductrice (146) étant identifiée comme étant intacte si le signal de mesure (168) ne présente aucune variation pendant la durée prédéterminée, et étant identifiée comme étant défectueuse si le signal de mesure (168) présente une variation pendant la durée prédéterminée.

2. Procédé selon la revendication 1, dans lequel la durée prédéterminée est comprise entre 0,08 ms et 1 ms et de préférence entre 0,5 ms et 1 ms.

3. Procédé selon la revendication 1 ou 2, dans lequel la tension électrique prédéterminée (U_{COM}) est abaissée pendant la durée prédéterminée.

4. Procédé selon la revendication 3, dans lequel la tension électrique prédéterminée (U_{COM}) est abaissée pendant la durée prédéterminée de telle sorte qu'une différence de tension (U_{P2}) entre la deuxième borne séparée (P2) et la borne commune (COM) de 450 mV à 1,2 V se forme.

5. Procédé selon la revendication 3, dans lequel la tension électrique prédéterminée (U_{COM}) est abaissée pendant la durée prédéterminée de telle sorte qu'une différence de tension (U_{P2}) entre la deuxième borne séparée (P2) et la borne commune (COM) de 450 mV à 1500 mV et de préférence de 600 mV à 1300 mV se forme.
